# EUROPEAN PATENT APPLICATION

(11) **EP 1 923 375 A1**
(43) Date of publication of application: **21.05.2008**
(21) Application number: 06123603.0
(22) Date of filing: 07.11.2006
(51) Int. Cl.: C04B 41/89

(54) **Coatings for ceramic substrates**

(71) Applicant: CYTEC SURFACE SPECIALTIES, S.A., 1070 Bruxelles (BE)
(72) Inventor: Moens, Luc, 1640, Sint-Genesius-Rode (BE)
(74) Representative: Destryker, Elise Martine

(57) **Abstract**

The invention relates to process for making highly mechanical and chemical resistant ceramic substrates, especially tiles, by coating said substrates with a base coat layer of a powder coating composition comprising at least one polyester having carboxyl-and/or hydroxyl-functional groups and at least one hardener having functional groups reactable with the polyester functional groups, curing the applied composition and applying a further layer comprising a radiation curable resin and curing this resin by exposure to electromagnetic radiation.

## Description

The invention relates to a process for coating ceramic substrates with thermosetting coating compositions and to the ceramic substrates thereby obtainable.

Usually ceramic substrates such as tiles or sanitary fittings are coated with enamels in order to be highly decorative as well as scratch-, wear- and solvent resistant. However this enamel technology is high energy consuming.

US 4,143,181 relates to a method of applying a coating composed of a primer and a topcoat on glass substrates. The primer, intended to protect the substrate from damage upon impact, is applied as a solution comprising a thermosetting binder composed of a hydroxyl functional polyester; the topcoat serves for improving resistance to caustic soda and also comprises a thermosetting binder composed of a hydroxyl functional polyester.

DE 19748927 relates to a method for obtaining a scratch resistant decorative or functional coating obtained from a thermosetting composition comprising polyester or polyurethane resins on heat resistant non metallic substrates. Hereto, the substrate is heated to a temperature which is above the softening temperature of the coating to apply and subsequently the powder is applied to the heated substrate without the use of electrostatic field, the substrate itself being electrically insulated. The substrate then is transferred to an oven for curing the thermosetting powder. A two-coat system is illustrated: a first black coating, a polyester-TGIC system, is applied at a thickness of 200 micron and cured for 10 minutes. Subsequently a second clear layer of the same polyester-TGIC system containing brass flakes is applied and cured for another 10 minutes in order to obtain a highly decorative coating.

US 6982137 relates to a method of forming color images on tiles or glass wherein the substrate is first coated with a clear powder polymer coating cured at 80 to 95 %, then a xerographically color image is applied thereto and finally another layer of the same polymer is applied thereto and the system is heated to achieve complete cure.

These coatings do not permit to obtain a high decorative finish proving also outstanding mechanical and chemical performances such as scratch resistance and chemical resistance.

We have now found coatings which do not present the drawbacks of those described before.

Therefore the present invention relates to a process for coating ceramic substrates which process comprises applying as a base coat layer to the substrate a powder coating composition comprising at least one polyester having carboxyl-and/or hydroxyl-functional groups and at least one hardener having functional groups reactable with the polyester functional groups, curing the applied composition and applying a further layer comprising a radiation curable resin and curing this resin by exposure to electromagnetic radiation.

By ceramic substrate is meant to understand in the present invention a product manufactured by the action of heat on earthy raw materials in which silicon with its oxide and complex compounds known as silicates occupy a predominant position. The ceramic substrate is preferably a structural clay product, such as a brick, tile, terra cotta or a glazed architectural brick. Ceramic tiles are preferred.

The powder coating composition used in the present invention is presented in the form of a fine powder which once applied on the substrate and upon heating forms a coating on the ceramic substrate during which process at least part of the functional groups from the polyester react with at least part of the functional groups of the hardener.

The polyesters used in the present invention are generally prepared from a polyacid component comprising from 70 to 100 mole % of aromatic polycarboxylic acids and /or their anhydrides and from 0 to 30 mole % of aliphatic or cycloaliphatic polyacids and/or their anhydrides, and from a polyol component comprising from 70 to 100 mole % of a branched chain aliphatic diol and from 0 to 30 mole % of other aliphatic or cycloaliphatic polyols.

The aromatic polycarboxylic acids are preferably terephthalic acid and isophthalic acid and mixtures thereof. The diols are preferably neopentyl glycol, propyleneglycol, 2-methyl-1,3 propanediol and 2-ethyl-2-butyl-1,3-propanediol and mixtures thereof.

The polyesters used in the present invention are preferably carboxyl functional polyesters preferably have an acid number from 15 to 100 mg KOH/g, more preferably from 30 to 70 mg KOH/g or hydroxyl functional polyesters having a hydroxyl number from 15 to 300 mg KOH/g, more preferably from 30 to 100 mg KOH/g.

The polyesters are preferably characterized by a number averaged molecular weight ranging from 600 to 15000 and more preferably from 1100 to 8500, measured by gel permeation chromatography (GPC).

The polyesters are preferably characterized by a glass transition temperature (Tg) from 35 to 80°C, measured by Differential Scanning Calorimetry according to ASTM D3418 with a heating gradient of 20°C per minute. The polyesters usuable in the process of the present invention more preferably present a Tg > 50 °C.

The polyesters are preferably characterized by a Brookfield (cone/plate) viscosity accordingly to ASTM D4287-88, ranging from 5 mPa.s, measured at 175°C, to 15000 mPa.s, measured at 200°C.

The polyesters used in the present invention are known in the prior art and have been described for being used in metal coating.

When a carboxyl functionalized polyester is used in the present invention, the hardener comprising reactive groups reactable with the reactive groups of this polyester is preferably selected from polyepoxy compounds, β-hydroxyalkylamide containing compounds and their mixtures. Preferred are polyepoxy compounds which are solid at room temperature and which contain at least two epoxy groups per molecule. Triglycidyl isocyanurates, such as the one marketed under the name Araldite®PT810 blends of diglycidyl terphthalate and triglycidyl trimellitates, such as those commercialized under the name of Araldite®PT910, and bisphenol A based epoxy resins such as those commercialized under the names GT 7004 or DER 692, are especially preferred. Acrylic copolymers containing glycidyl groups obtained from glycidyl methacrylate and/or glycidyl acrylate and another (meth)acrylic monomer and, optionally, an ethylenically mono-unsaturated monomer can also be used. Preferred acrylic copolymer is GMA300 commericalized by Estron Chemical Inc and described in WO 91/01748.

β-hydroxyalkylamides which contain at least one, preferably two, bis(β-hydroxyalkyl)amide groups are also especially preferred. Such compounds have for example been described in US-A-4727111.

The hardener described herein above is generally used in an amount from 0.25 to 1.40, preferably from 0.60 to 1.05, equivalent of carboxyl group present in the polyester per equivalent of epoxy or β-hydroxyalkyl groups present in the harderner.

When a hydroxyl functionalized polyester is used the hardener is preferably selected from blocked isocyanate crosslinking agents. Examples of blocked polyisocyanate crosslinking compounds include those which are based on isophorone diisocyanate blocked with ε-caprolactam, commercially available as Vestagon®B1530, Ruco®NI-2 and Cargill®2400 or toluene-2,4-diisocyanate blocked with ε-caprolactam, commercially available as Cargill®2450, and phenol-blocked hexamethylene diisocyanate.

Another class of blocked polyisocyanate compounds which may be employed are adducts of the 1,3-diazetidine-2,4-dione dimer of isophorone diisocyanate and a diol, wherein the ratio of NCO to OH-groups in the formation of the adduct is about 1:0.5 to 1:0.9, the mole ratio of diazetidinedione to diol is from 2:1 to 6:5, the content of free isocyanate groups in the adduct is not greater than 8 weight percent and the adduct has a molecular weight of about 500 to 4000 and a melting point of about 70 to 130°C. Such an adduct is commercially available under the name Vestagon®BF1540.

The hardener is generally used in an amount from 0.3 to 1.4, preferably from 0.7 to 1.2, equivalent of hydroxyl group present in the polyester per equivalent of (blocked) isocyanate present in the hardener.

The powder coating composition used as base coat layer in the present invention may comprise besides the binder comprising one or more polyester and one or more hardener as described here above, other additives, fillers and/or pigments commonly used in the powder coating compositions.

The powder coating composition preferably comprises at least one pigment and/or colorant.

The powder coating composition used in the process according to the invention preferably comprises from 30 to 97 % by weight of polyester, from 3 to 50 % by weight of hardener, from 0 to 50 %, more preferably from 5 to 30 %, by weight of colorant and/or pigment and/or fillers and from 0 to 10 % by weight of other additives.

The components of the powder coating composition used in the process according to the invention may be mixed by dry blending in a mixer or blender, for example a drum mixer. The premix is then usually homogenised at temperatures ranging from 70 to 150°C in a single screw or double screw extruder. The extrudate, when cooled down, is grounded to a powder, preferably with a particle size ranging from 10 to 150 µm.

The powder coating composition can be applied to the ceramic substrate by any powder-coating process. The powdered composition may be deposed on the ceramic substrate by use of a powder gun such as an electrostatic CORONA gun or TRIBO gun. On the other hand well known methods of powder deposition such as the fluidised bed technique can be used.

In a preferred embodiment of the process according to the invention the ceramic substrate, e.g. a tile, is first preheated to a temperature above the glass transition temperature of the powder coating composition, more preferably the substrate is preheated until it has a temperature of from 60 to 200 °C. The powder then is applied to the preheated substrate, preferably without the use of an electrical field and more preferably ensuring that the substrate is thermal and electrical insulated. After deposition the ceramic substrate containing the powder is generally heated to a temperature between 120 and 300°C for a curing time of from 1 to 60 minutes, causing the particles to flow and fuse together to form a smooth, uniform, continuous, uncratered coating on the substrate surface.

In the process according to the invention the substrate can be coated with more than one powder coating composition as described here above. In this case, the coating compositions can be the same or different.

The powder coating composition used in the present invention is preferably applied directly on the ceramic substrate without any primer coating being applied before applying the powder coating composition.

According to an embodiment of the present invention, the ceramic substrate is first mechanically polished before applying the polyester powder coating composition as described here above.

The thickness of the layer comprising the powder coating composition is generally from 25 to 250 µm after curing. The thickness of this layer is preferably at least 50 µm so that any defects in the surface of the substrate are rendered invisible.

The radiation curable resin used for making the further layer in the process according to the present invention is generally based on polymers, oligomers and/or monomers which have ethylenically unsaturated bounds, preferably (meth)acrylic groups, which can undergo free-radical polymerization on exposure to electromagnetic radiation such as UV-radiation or electron beams, and which are further designated in the present invention as being radiation curable polymer precurors. In the present invention, the term "(meth)acryl' is to be understood as to encompass both acryl and methacryl compounds or derivatives as well as mixtures thereof.

The radiation curable resin may be in any form, such as a liquid, a solid or a dispersion. Preferred monomers are acrylic acid, methacrylic acid, beta-carboxyethyl acrylate, butylacrylate, butylmethacrylate, methylacrylate, methylmethacrylate (MAM), isobutyl acrylate, 2-ethylhexylacrylate, 2-ethylhexylmethacrylate, cyclohexyl acrylate, n- hexyl acrylate, n-hexyl methacrylate, isobornyl acrylate, isobornyl methacrylate, isooctyl acrylate, n-lauryl acrylate, n-lauryl methacrylate, octyl/decyl acrylate, octyl/decyl methacrylate, 2-hydroxyethylacrylate, 2-hydroxyethylmethacrylate, phenoxyethylacrylate, phenoxyethylmethacrylate, nonylphenolethoxylate monoacrylate, nonylphenolethoxylate monomethacrylate, 2-(-2-ethoxyethoxy)ethylacrylate, 2-butoxyethyl acrylate, cyclohexyl acrylate, cardura acrylate, cardura methacrylate, N-vinyl pyrrolidone, 1,6-hexanediol diacrylate (HDDA), pentaerythritoltriacrylate (PETIA), trimethylolpropanetriacrylate (TMPTA), phenylglycidyletheracrylate, and acrylated or methacrylated oxyethylated or/and oxypropylated derivatives thereof.

When used, the quantity of monomer(s) present in the radiation curable resin is generally at least 5 % by weight, preferably at least 15 % by weight. The quantity of monomer does usually not exceed 70 % by weight, preferably it does not exceed 40 % by weight.

The oligomers and polymers are generally selected from urethane (meth)acrylates, polyurethane (meth)acrylates, polyester (meth)acrylates, polyether (meth)acrylates, epoxy (meth)acrylates, (meth)acrylated (meth)acrylates and any mixture thereof. Preferred oligomers are urethane (meth)acrylates and epoxy (meth)acrylates.

Urethane(meth)acrylates are well known in the art and commercially available products. Urethane(meth)acrylates commericalized under the name of EBECRYL® 5129 are particularly suitable.

When used, the quantity of oligomer(s) present in the radiation curable resin is generally at least 5 % by weight, preferably at least 10 % by weight. The quantity of oligomer does usually not exceed 90 % by weight, preferably it does not exceed 80 % by weight.

The compositions used in the present invention more preferably comprise at least one oligomer and at least one monomer such as described here above as polymer precursor.

Preferred polymers are (meth)acrylated (meth)acrylic copolymers, (meth)acrylated polyphenoxy resins and polyester (meth)acrylates, especially those which have been described for using in UV-curable powder coatings. Such polymers have been described for example in US 6,384,102. According to a first embodiment of the process according to the invention the radiation curable resin used for making the further layer is a radiation curable powder coating composition, more preferably one comprising at least one (meth)acrylated (meth)acrylic copolymer.

According to a second embodiment of the process according to the invention the radiation curable resin used for making the further layer is a solvent free liquid composition, more preferably one comprising a radiation curable urethane (meth)acrylate oligomer and optionally a monomer.

According to a third embodiment of the process according to the invention the radiation curable resin used for making the further layer is a water based radiation curable composition, more preferably a radiation curable polyurethane dispersion. UV curable polyurethane dispersions are well known, they have for example been commercialized under the name of UCECOAT®.

The radiation curable resin used in the present invention generally comprises a photoinitiator capable of initiating the polymerisation by exposure to actinic radiation, like UV radiation. Typically about 0.01 to 15 % by weight of a photoinitiator is used when the composition has to be polymerised by exposure to UV radiation. Preferably, the amount of photoinitiator in the composition is comprised between 3 and 10 % by weight. Alternatively, no photoinitiator is necessary when the resin is cured by electron beam.

The radiation curable composition according to the present invention can also contain other compounds, such as flow agents, rheology modifiers, matting agents, defoaming agents, wetting agents, adhesion promotors and stabilizers. The amount of other compounds usually does not exceed 10 % by weight.

The radiation curable resin used in the present invention is preferably a clear coat comprising no colorant and/or pigment.

The radiation curable resin can be applied to the ceramic substrate by any coating process suitable thereto. When the radiation curable resin is in the form of a powder, the radiation curable powder is preferably applied to the ceramic substrate containing the polyester layer standing at a temperature of 60 to 200 °C, preferably without the use of an electrical field and preferably ensuring that the substrate is thermal and electrical insulated. The curing is then preferably done by exposing the coated substrate to electromagnetic radiation such as UV-radiation or electron beams, preferably UV light, generally during 1 to 60 seconds and a temperature of 80 to 200 °C.

When an solvent free liquid resin composition or a water based radiation curable dispersion is used, the radiation curable resin can be applied to the ceramic substrate comprising the polyester layer by any means suitable therefore such as dip coating, spray coating, electrostatic coating, film coating, curtain coating, vacuum application, roll coating or the like. The application of the curable resin to the ceramic substrate can be done at any suitable temperature, usually from 10 to 80 °C, preferably at room temperature, for example by heating the substrate, the roller coater and/or the curable composition.

After the coating of the substrate with the radiation curable composition, the latter is cured. Curing, i.e. polymerization can be achieved by any suitable means well known to those skilled in the art. The irradiation curing can be done by using UV light or ionizing radiation such as gamma rays, X-rays or electron beam. In the process according to the invention, electron beam and especially UV-radiation are preferred.

In the process according to the invention the substrate can be coated with more than one radiation curable resin as described here above. In this case, the resin compositions can be the same or different.

The thickness of the layer comprising the radiation curable resin is generally from 3 to 35 µm for a liquid or water based resin composition and from 25 to 100 µm for a powder composition.

The radiation curable resin can be applied directly on the powder base coat or one or more intermediate layer may be applied between both layers. A color image or pattern may be applied between the powder base coat and the layer of the radiation curable resin. Alternatively this color image may be applied to the ceramic substrate by the method as described in US 6982137.

The further layer comprising the radiation curable resin is preferably the topcoat layer on the ceramic substrate.

The process according to the invention permits to obtain ceramic substrates, especially ceramic tiles, which present a high decorative finish as well as outstanding mechanical and chemical performances, such as scratch resistance, stain resistance and chemical resistance. This makes these tiles suitable for being used in bathrooms, kitchens and other environments where high resistance is necessary.

The present invention therefore also relates to ceramic substrates, especially tiles, which can be obtained by the process as described here above.

The present invention further relates to ceramic substrates, especially tiles, comprising a least one base coat layer obtained from a powder coating composition comprising at least one carboxyl- and/or hydroxyl-functional polyester and at least one hardener having functional groups reactable with the polyesters' functional groups and at least one further layer obtained from a radiation curable resin.

The examples which will follow illustrate the invention without limiting it.

### Preparation Example 1: Synthesis of a carboxyl functional polyester PE1

A mixture of 408.37 parts of neopentyl glycol was placed in a conventional four neck round bottom flask equipped with a stirrer, a distillation column connected to a water cooled condenser, an inlet for nitrogen and a thermometer attached to a thermoregulator. The flask contents were heated, while stirring under nitrogen, to a temperature of circa 130°C at which point 532.59 parts of terephthalic acid, 59.18 parts of adipic acid and 2.00 parts of n-butyltintrioctoate were added. The heating was continued gradually to a temperature of 230°C. Water was distilled from the reactor from 180°C on. When distillation under atmospheric pressure stopped, a vacuum of 50 mm Hg was gradually applied. After three hours at 230°C and 50 mm Hg, a polyester with following characteristics was obtained: AN : 3 mg KOH/g, OHN : 42 mg KOH/g.

The reaction mixture was then cooled to 170-190°C followed by the addition of 119.18 parts of trimellitic anhydride. The temperature was maintained at 180°C until the reaction mixture became clear.

A carboxyl functional polyester with following characteristics was obtained : AN=72 mg KOH/g, OHN=6 mg KOH/g, Brfld(175°C) viscosity (cone/plate)=10.000 mPa.s; Tg (DSC, 20°/min)=58°C

### Preparation Example 2: Synthesis of a carboxyl-functional polyester PE2

423.82 parts of neopentyl glycol was placed in the reactor and heated, while stirring under nitrogen, to a temperature of circa 130°C at which point 720.34 parts of isophthalic acid and 2.5 parts of n-butyltintrioctoate were added. The heating was continued gradually to a temperature of 230°C and water was distilled from the reactor from 180°C on. When distillation under atmospheric pressure stopped, a vacuum of 50 mm Hg was gradually applied. After three hours at 230°C and 50 mm Hg, a carboxyl functional polyester with following characteristics was obtained: AN: 32 mg KOH/g; OHN: 2 mg KOH/g; Brfld200°C viscosity (cone/plate) : 3000 mPa.s; Tg (DSC, 20°/min) : 57°C.

### Preparation Example 3 : Synthesis of a hydroxyl-functional polyester PE3

A mixture of 439.94 parts of neopentyl glycol and 14.14 parts of trimethylolpropane was placed in a reactor and heated, while stirring under nitrogen, to a temperature of circa 130°C at which point 645.62 parts of terephthalic acid, 33.98 parts of adipic acid and 2.5 parts of n-butyltintrioctoate were added. The heating was continued gradually to a temperature of 230°C and water was distilled from the reactor from 180°C on. When distillation under atmospheric pressure stopped, a vacuum of 50 mm Hg was gradually applied. After three hours at 230°C and 50 mm Hg, a hydroxyl-functional polyester with following characteristics was obtained: AN: 3 mg KOH/g; OHN: 32 mg KOH/g; Brfld200°C (cone/plate) viscosity : 7800 mPa.s; Tg (DSC, 20°/min): 56°C.

### Reference Examples 1 to 3 :

The polyesters resins of Preparation Examples 1 to 3 were formulated into a black powder accordingly the following formulations :

| Powder composition 1 | | Powder composition 2 | | Powder composition 3 | |
|---|---|---|---|---|---|
| Composition | Quantity (g) | Composition | Quantity (g) | Composition | Quantity (g) |
| PE 1 | 27.24 | PE 2 | 50.67 | PE 3 | 47.94 |
| Epoxy hardener AralditeGT7004 | 27.24 | Hardener Araldite PT810 | 3.81 | Hardener Vestagon BF1530 | 6.54 |
| CarbonBlack FW2 | 1.06 | CarbonBlack FW2 | 1.06 | CarbonBlack FW2 | 1.06 |
| Blanc Fix F | 21.60 | Blanc Fix F | 21.60 | Blanc Fix F | 21.60 |
| Benzoin | 0.35 | Benzoin | 0.34 | Benzoin | 0.35 |
| Modaflow P6000 | 0.99 | Modaflow P6000 | 0.99 | Modaflow P6000 | 0.99 |

The powders of, respectively, Powder Compositions 1 to 3 were applied on non-polished tiles. Hereto, the tile was preheated for 10 minutes at 200°C and then transferred to a wooden support in order to have electrical insulation. Subsequently the powder was sprayed using a Gema Volstatic PCG1 without the application of an electrical field at a layer thickness of 160 micron. The tile then was transferred to a convection oven where it was cured for 30 minutes at 200°C. A polyester coated tile was obtained with the characteristics as presented in the Table here under.

### Example 4 :

A radiation curable resin based on an unsaturated acrylic copolymer was prepared as follows :
Step 1: 382,77 weight parts of n-butylacetate were brought in a reactor under mild nitrogen overflow conditions and heated to 125°C. The temperature was measured in the solvent and regulated at 125°C.

Two additions were carried out in parallel:
1) addition M of the monomers consisting of 95,69parts styrene, 95,69 parts glycidylmethacrylate, 143,54 parts n-butylmethacrylate, 143,54 parts of methyl methacrylate.
2) addition I of the initiator TRIGONOX®C (14,35 parts) solubilised in another 95,69 parts of n-butylacetate.

Once the temperature reached 125,0°C, addition I was started, which takes 215 minutes till the end of the addition. 5 minutes after the start of the addition I, addition M was started which takes 180 minutes. After ending the addition I the reaction mixture was kept another 100 minutes at 125 °C and then heated for stripping at 175°C at a reduced pressure of 600 mbar during 30 minutes. After these 30 minutes, the temperature was kept at 175°C but the pressure was reduced to 50 mbar for another 90 minutes.

The obtained copolymer was characterised by Mn (GPC; polystyrene cal.): 4707; Mw : 12739, disp. 2.7; Tg (DSC): 45; epoxy content (g/eq): 855 and BKFD visc. in mPa.s at 175°C: 6530.

Step 2: 933.01 mass parts of the above mentioned copolymer were brought in a round bottom flask of 5 1, electrically heated by a thermoregulator.

61,23 parts of methacrylic acid were mixed with 0,99 parts of MEHQ and 0,99 parts of TNPP and heated to 160°C (mass temperature) and an air supply was also immersed in the resin mass. At a temperature of 160°C, 0,99 parts of MEHQ, 2,48 parts of BETP and 0,30 parts of fenothiazine were added in the resin mass and homogenized for 30 min. With a piston pump the methacrylic acid mix was added over a time period of 30' during which the heating of the 5 1 flask was shut off. The temperature slowly decreases to 140°C. 40 min after ending the methacrylic acid addition the acid number was titrated : once it arrived below 0,5 mg KOH/g the reaction was stopped.

The methacrylated copolymer so obtained was characterised by: Unsaturated equivalent weight: 1400 g/equiv; Tg DSC (Q) : 44°C, Mn : 4663; Mw: 13458.

A radiation curable powder was prepared by mixing 1000 g of this methacrylated copolymer with 20 g of photoinitiator Irgacure®2959, 5 g of photoinitiator Irgacure®819 and 10 g of flow modifier Modaflow®P6000.

This radiation curable powder was sprayed using a Gema Volstatic PCG1 without the application of an electrical field at a layer thickness of 80 micron on the black coated tile obtained in Reference Example 1 immediately after curing of the first coating obtained with Powder composition 1 as described here above while the tile was still standing at a temperature of about 150°C.

The coating deposited was then subjected to melting in a medium infrared/convection oven (Triab) at a temperature of 140°C during a time of approximately 3 minutes, and then subjected to irradiation with ultraviolet light emitted by a 160 W/cm Gallium-doped followed by a 160 W/cm medium pressure mercury vapour UV-bulb (Fusion UV Systems Ltd.) with a total UV dose of 4000 mJ/cm2.

The properties of the tile so obtained are presented in the table here under.

### Example 5:

A radiation curable solvent free liquid resin composition was prepared by mixing 800 g of urethaneacrylate EBECRYL®5129, 200 g of HDDA, 60 g of photoinitiator and 10 g of a silicone based flow agent.

This resin was sprayed using a High Volume Low Pressure Spray gun with a nozzle of 1.8 mm and a pressure at the nozzle of 0.7 bar at a layer thickness of 10 to 12 g/m2 on the coated tile obtained in Reference Example 2 after coating with Powder composition 2 as described here above, standing at room temperature. The coating then was cured under two 80W/cm medium pressure mercury vapour UV-bulb (Fusion UV Systems Ltd.) at a speed of 10m/ minute.

The properties of the tile so obtained are presented in the table here under.

### Example 6:

A radiation curable polyurethane dispersion was prepared by mixing 100 g of a polyurethane dispersion UCECOAT®7773, 1.5 g of photo-initiator, 2 g of rheology modifier UCECOAT®XE430, 1. g of matting agent ACEMAT®TS100, 3 g of matting / scratch resistance agent AQUAMAT® 208, 0.1 g of defoaming agent BYK® 025 and 0.3 g of wetting agent EMULAT®S793.

This composition was sprayed using a High Volume Low Pressure Spray gun with a nozzle of 1.8 mm and a pressure at the nozzle of 0.7 bar at a layer thickness of 20 to 22 g/m2 on the coated tile of Reference Example 3 standing at room temperature. The coating then is cured under two 80W/cm medium pressure mercury vapour UV-bulb (Fusion UV Systems Ltd.) at a speed of 5m/ minute.

The properties of the tile so obtained are presented in the table here under.

In this table:
Column 2: indicates the 60° gloss, measured according to ASTM D523
Column 3 : indicates the MEK resistance. The figures indicate the number of double rubs carried out until damaging of the coating starts.
Column 4: indicates the pencilhardness according to Scratch Hardness Tester according to Wolff Wilborn
Column 5: indicates the coating evaluation after a 16 hour staining with, respectively: ammonia (10% in water)/denaturated ethanol (48% in water)/acetone/red wine/mustard/stamp ink, accordingly DIN 68861 (Part 1).

Hereto the agent was placed upon the surface of the coated tile and covered with a Petri dish. The tile was then allowed to stand undisturbed for 16 hours. After exposure, the surface was cleaned and evaluated accordingly a rating of from 0 to 5 where: 0 means no changes/1 means minor changes in gloss or colour/2 means changes in gloss or colour but no surface damage/3 means major changes visible but no real damage of the surface/4 means major changes visible and damage of the surface/5 means most of the exposed surface is damaged.

| | Gloss, 60° | MEK-rubs | Pencil hardness | Stain resistance |
|---|---|---|---|---|
| Reference Example 1 | 98 | 200 | HB | 1/1/3/0/2/1 |
| Reference Example 2 | 100 | 200 | HB | 1/2/5/0/2/2 |
| Reference Example 3 | 99 | 200 | HB | 1/1/4/1/2/1 |
| Example 4 | 100 | 200 | 2H | 0/0/3/0/0/0 |
| Example 5 | 101 | 200 | 5H | 0/0/0/0/0/0 |
| Example 6 | 100 | 200 | 3H | 0/0/1/0/0/0 |

The tiles obtained in, respectively, Examples 4 to 6 as well as the tiles obtained in Reference Examples 1 to 3 prove a very smooth finish without any craters and/or defects.

The results in this table show that the ceramic tiles obtained by the process of the invention (Examples 4 to 6) have a very good scratch resistance as well as stain resistance.

## Claims

1. A process for coating ceramic substrates which process comprises applying as a base coat layer to the substrate a powder coating composition comprising at least one polyester having carboxyl-and/or hydroxyl-functional groups and at least one hardener having functional groups reactable with the polyester functional groups, curing the applied composition and applying a further layer comprising a radiation curable resin and curing this resin by exposure to electromagnetic radiation.

2. The process according to claim 1 wherein said polyester is prepared from a polyacid component comprising from 70 to 100 mole % of aromatic polycarboxylic acids and/or their anhydrides and from 0 to 30 mole % of aliphatic or cycloaliphatic polyacids and/or their anhydrides, and from a polyol component comprising from 70 to 100 mole % of a branched chain aliphatic diol and from 0 to 30 mole % of other aliphatic or cycloaliphatic polyols.

3. The process according to claim 1 wherein said polyester is a carboxyl functionalized polyester and the hardener is selected from polyepoxy compounds, β-hydroxyalkylamide containing compounds and their mixtures.

4. The process according to claim 1 wherein said polyester is a hydroxyl functionalized polyester and the hardener is selected from blocked isocyanate crosslinking agents.

5. The process according to claim 1 wherein the powder coating composition comprises from 30 to 97 % by weight of polyester, from 3 to 50 % by weight of hardener, from 0 to 50 % by weight of colorant and/or pigment and/or filler and from 0 to 10 % by weight of other additives.

6. The process according to claim 1 wherein the ceramic substrate is first preheated to a temperature above the glass transition temperature of the powder coating composition, after which the powder coating composition is applied to the substrate and the ceramic substrate containing the powder is heated to a temperature between 120 and 300°C for a curing time of from 1 to 60 minutes.

7. Process according to claim 6 wherein the powder coating composition is applied to the substrate without the use of an electrical field and by ensuring that the substrate is thermal and electrical insulated.

8. The process according to claim 1 wherein the radiation curable resin used for making the further layer is a radiation curable powder coating composition comprising at least one (meth)acrylated (meth)acrylic copolymer.

9. The process according to claim 1 wherein the radiation curable resin used for making the further layer is a solvent free liquid composition comprising a radiation curable urethane (meth)acrylate oligomer and, optionally a monomer.

10. The process according to claim 1 wherein the radiation curable resin used for making the further layer is a water based radiation curable polyurethane dispersion.

11. Ceramic substrates, especially tiles, comprising a least one base coat layer obtained from a powder coating composition comprising at least one carboxyl- and/or hydroxyl-functional polyester and at least one hardener having functional groups reactable with the polyesters' functional groups and at least one further layer obtained from a radiation curable resin.
